**Europäisches Patentamt**

**European Patent Office**

**Office européen des brevets**

(19)

(11) Veröffentlichungsnummer: **0 257 212**
**A2**

(12) **EUROPÄISCHE PATENTANMELDUNG**

(21) Anmeldenummer: 87107999.2

(22) Anmeldetag: 03.06.87

(51) Int. Cl.⁴: **E05B 49/00**

(30) Priorität: 23.08.86 DE 3628706

(43) Veröffentlichungstag der Anmeldung:
02.03.88 Patentblatt 88/09

(84) Benannte Vertragsstaaten:
**DE FR GB IT**

(71) Anmelder: **VDO Adolf Schindling AG**
**Gräfstrasse 103**
**D-6000 Frankfurt/Main(DE)**

(72) Erfinder: **Rathmann, Klaus**
**Dreikönigstrasse 8**
**D-6000 Frankfurt am Main(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Zentralverriegelungsanlage für ein Kraftfahrzeug.**

(57) Bei einer Zentralverriegelungsanlage für ein Kraftfahrzeug, wobei zur Steuerung mehrerer Verriegelungsvorrichtungen mehrere an verschiedenen Stellen des Kraftfahrzeugs angeordnete Bedienstellen vorgesehen sind, denen von einem Signalgeber Signale zum Ver-und/oder Entriegeln zuführbar sind, sind in Abhängigkeit davon, welcher Bedienstelle Signale zugeführt werden, einzelne Verriegelungsvorrichtungen von der Steuerung ausgenommen. Insbesondere ist bei Zuführung von Signalen zu in Bereichen der Türen (Fahrertür, Beifahrertür) angeordneten Bedienstellen eine für die Kofferraumklappe vorgesehene Verriegelungsvorrichtung von der Steuerung ausgenommen.

Fig.1

EP 0 257 212 A2

## Zentralverriegelungsanlage für ein Kraftfahrzeug

Die Erfindung betrifft eine Zentralverriegelungsanlage für ein Kraftfahrzeug, wobei zur Steuerung mehrerer Verriegelungsvorrichtungen mehrere an verschiedenen Stellen des Kraftfahrzeugs angeordnete Bedienstellen vorgesehen sind, denen von einem Signalgeber Signale zum Ver-und/oder Entriegeln zuführbar sind.

Bei bekannten Zentralverriegelungsanlagen werden durch Betätigung eines Türschlosses Verriegelungsvorrichtungen an sämtlichen Türen, an der Kofferraumklappe und am Tankverschluß mit pneumatischen, hydraulischen oder elektrischen Mitteln verstellt. Bei diesen bekannten Zentralverriegelungsanlagen ist es jedoch nachteilig, daß bei jedem Entriegeln der Türen die Kofferraumklappe ebenfalls entriegelt wird, so daß während der Fahrt die Kofferraumklappe entriegelt bleibt. Dieses ermöglicht jedoch, eine unbefugte Öffnung des Kofferraums während eines Halts an einer Ampel oder in einem Verkehrsstau.

Bei einer anderen bekannten Zentralverriegelungsanlage sind Haupt-und Nebenschlüssel vorgesehen, wobei mit dem Nebenschlüssel lediglich die Türen, jedoch nicht die Kofferraumklappe entriegelt werden kann. Durch die Funktionsweise dieser bekannten Zentralverriegelungsanlage wird beispielsweise bei einem Werkstattaufenthalt, wenn dort nur der Nebenschlüssel zurückgelassen wird, ein Zugriff auf den Inhalt des Kofferraums verhindert. Für den täglichen Betrieb ist die Benutzung des Nebenschlüssels jedoch nicht vorgesehen, da hierzu der Fahrer jeweils zwei Schlüssel mit sich führen müßte.

Bei einer weiteren bekannten Zentralverriegelungsanlage, bei welcher ebenfalls Haupt-und Nebenschlüssel vorgesehen sind und bei der Betätigung mit dem Hauptschlüssel alle angeschlossenen Verschlußelemente ver-oder entriegelt werden, wird eine Entriegelung des Kofferraumverschlusses verhindert, solange ein Schlüssel im Anlaßschalter steckt. Bei dieser bekannten Zentralverriegelungsanlage wird demnach bei jedem Einsteigen in das Kraftfahrzeug die Kofferraumklappe entriegelt und erst wieder verriegelt, wenn der Schlüssel im Anlaßschalter steckt. Sollte sich dieses jedoch verzögern, beispielsweise weil der Fahrer in einer fremden Umgebung eine Landkarte studiert, so bleibt die Kofferraumklappe solange entriegelt.

Aufgabe der vorliegenden Erfindung ist es, bei einer Zentralverriegelungsanlage für ein Kraftfahrzeug sicherzustellen, daß die Kofferraumklappe nicht unnötigerweise entriegelt wird, wobei eine einfache Bedienbarkeit gewährleistet sein soll - ohne beispielsweise zwischen einem Haupt-und einem Neben schlüssel unterscheiden zu müssen.

Die erfindungsgemäße Zentralverriegelungsanlage ist dadurch gekennzeichnet, daß in Abhängigkeit davon, welcher Bedienstelle Signale zugeführt werden, einzelne Verriegelungsvorrichtungen von der Steuerung ausgenommen sind. Bei der erfindungsgemäßen Zentralverriegelungsanlage braucht der Fahrer nicht zwischen verschiedenen Funktionen bzw. Kommandos zu unterscheiden. Lediglich dadurch wird eine Auswahl unter den verschiedenen Verriegelungsvorrichtungen getroffen.

Eine Weiterbildung der Erfindung besteht darin, daß bei Zuführung von Signalen zu in Bereichen der Türen (Fahrertür, Beifahrertür) angeordneten Bedienstellen eine für die Kofferraumklappe vorgesehene Verriegelungsvorrichtung von der Steuerung ausgenommen ist.

Diese Weiterbildung der Erfindung dient zur Sicherung des Kofferraums. Mit der Erfindung an sich kann jedoch auch das unbeabsichtigte Öffnen von anderen Verschlußvorrichtungen des Kraftfahrzeugs verhindert werden.

Gemäß einer anderen Weiterbildung ist vorgesehen, daß über eine Bedienstelle im Bereich des Kofferraums Verriegelungsvorrichtungen an der Kofferraumklappe und an den Türen betätigbar sind. Diese Weiterbildung berücksichtigt in vorteilhafter Weise, daß nach einem Öffnen des Kofferraums auch häufig ein Zugang zum Fahrgastraum erwünscht ist.

Für den Fall, daß der Kofferraum geöffnet werden soll, während der Fahrer an seinem Platz bleibt, ist gemäß einer anderen Weiterbildung vorgesehen, daß im Fahrgastraum eine weitere Bedienstelle angeordnet ist, mit welcher die Verriegelungsvorrichtung für die Kofferraumklappe bedienbar ist. Eine vorteilhafte Ausführungsform dieser Weiterbildung besteht darin, daß der Signalgeber eine bauliche Einheit mit einem Schlüssel bildet und daß die weitere Bedienstelle im Bereich des Anlaßschalters angeordnet ist.

Dadurch, daß eine Zeitsteuerung vorgesehen ist, die eine vorgegebene Zeit nach dem Entriegeln die Kofferraumklappe verriegelt, wird ein weiterer Bedienvorgang zum Verriegeln der Kofferraumklappe überflüssig.

Gemäß einer anderen Weiterbildung der Erfindung ist vorgesehen, daß die Bedienstellen und der Signalgeber drahtlose Übertragungseinrichtungen bilden; dabei sind die drahtlosen Übertragungseinrichtungen vorzugsweise Infrarot-Übertragungseinrichtungen.

Hierfür eignet sich insbesondere ein in der Patentanmeldung P 35 29 882.0 vorgeschlagenes System zum Ver-und/oder Entriegeln einer Sicherheitseinrichtung, bei welchem codierte Informationen von einem Signalerzeuger Empfängervorrichtungen zugeführt werden.

Zur Unterscheidung, welche der Bedienstellen Signale empfängt, kann gemäß einer anderen Weiterbildung vorgesehen sein, daß die Bedienstellen von Empfangseinrichtungen gebildet sind, deren Ausgänge mit jeweils einem Eingang eines Steuergerätes verbunden sind.

Dabei umfassen vorzugsweise die Empfangseinrichtungen je einen Strahlungsempfänger, einen Verstärker und einen Demodulator.

Ferner können bei dieser Weiterbildung die Bedienstellen Sendeeinrichtungen aufweisen, die mit jeweils einem Ausgang des Steuergerätes verbunden sind. Dabei kann ein Austausch von Daten zwischen dem Signalgeber und der Bedienstelle im Sinne der bereits erwähnten Patentanmeldung P 35 29 882.0 zu einer Erhöhung der Sicherheit gegenüber einem unbefugten Öffnen bzw. Benutzen des Kraftfahrzeugs vorgesehen sein. Die Sendeeinrichtungen umfassen vorzugsweise jeweils einen Modulator, einen Verstärker und einen Strahlungssender.

Eine andere Weiterbildung der Erfindung sieht vor, daß die Bedienstellen Empfangseinrichtungen umfassen, deren Ausgänge über ein Bussystem mit einem Steuergerät verbunden sind. Dadurch ist eine einfachere Verkabelung zwischen den Bedienstellen und dem Steuergerät möglich. Bei Verwendung von seriellen Signalen, was wegen des verhälnismäßig geringen Informationsflusses zwischen dem Steuergerät und den Bedienstellen ohne weiteres möglich ist, ist lediglich eine Verbindung der Bedienstellen mit dem Steuergerät durch eine einzige Leitung erforderlich. Dabei wird zwar die jeder Bedienstelle zugeordnete Schaltung aufwendiger. Durch die integrierte Schaltungstechnik und die Entwicklung von Multiplex-Systemen für andere Zwecke sind jedoch derartige Schaltungen preiswert erhältlich.

Je nach Voraussetzungen im einzelnen kann bei dieser Weiterbildung vorgesehen sein, daß die Empfangseinrichtungen je einen Strahlungsempfänger, einen Verstärker, einen Demodulator und eine Ausgabeeinheit umfassen, welche den empfangenen Signalen Kennsignale hinzufügt, welche die jeweilige Bedienstelle kennzeichnen, oder daß die Empfangseinrichtungen je einen Strahlungsempfänger, einen Verstärker, einen Demodulator und eine adressierbare Ausgangsschnittstelle umfassen, welche nach einem Abfragesignal der Steuereinheit die empfangenen und demodulierten Signale an die Steuereinheit ausgibt.

Auch bei dieser Weiterbildung können die Bedienstellen ferner Sendeeinrichtungen aufweisen, die mit dem Bussystem verbunden sind. Dabei besteht eine vorteilhafte Ausgestaltung darin, daß die Sendeeinrichtungen jeweils eine adressierbare Eingangsschnittstelle, einen Modulator, einen Verstärker und einen Strahlungssender umfassen.

Die Erfindung läßt zahlreiche Ausführungsformen zu. Drei davon sind schematisch in der Zeichnung an Hand mehrerer Figuren dargestellt und nachfolgend beschrieben. Es zeigt:

Fig. 1 die Anordnung mehrerer Bedienstellen an einem Kraftfahrzeug,

Fig. 2 ein Blockschaltbild eines ersten Ausführungsbeispiels,

Fig. 3 ein Blockschaltbild eines zweiten Ausführungsbeispiels und

Fig. 4 ein Blockschaltbild eines dritten Ausführungsbeispiels.

Gleiche Teile sind in den Figuren mit gleichen Bezugszeichen versehen.

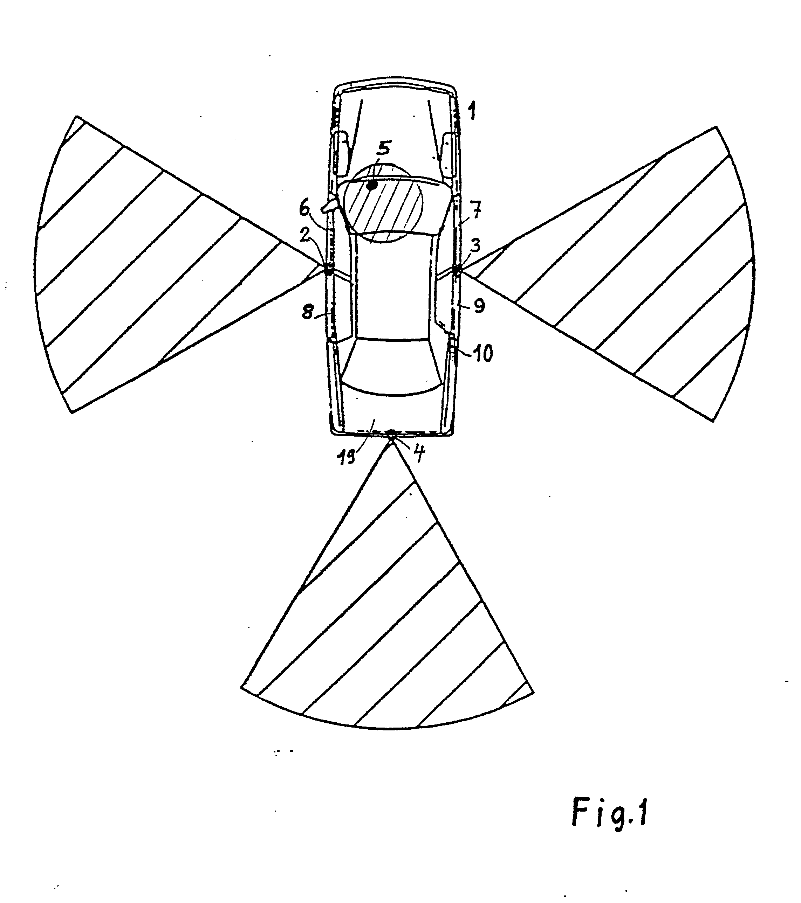

Bei dem in Fig. 1 schematisch dargestellten Kraftfahrzeug 1 sind an der Fahrertür 6, an der Beifahrertür 7, an der Kofferraumklappe 19 und in der Nähe des Anlaßschalters Bedienstellen 2, 3, 4, 5 für die Zentralverriegelungsanlage vorgesehen. Die Bedienstellen sind vorzugsweise Infrarot-Empfänger. Grundsätzlich können jedoch auch andere Empfänger drahtloser Signale vorgesehen sein. Die Richtcharakteristik der Infrarot-Empfänger ist in Fig. 1 gestrichelt dargestellt. Tritt der Fahrer an die Fahrertür 6 heran und betätigt dabei einen zu der Zentralverriegelungsanlage gehörenden Codesender, so werden die Fahrertür 6, die Beifahrertür 7 und die Fondtüren 8, 9 geöffnet, während die Kofferraumklappe 19 geschlossen bleibt. Sind die Türen bei einer Signalabgabe bereits entriegelt, so erfolgt eine Verriegelung. Die Kofferraumklappe 19 kann jedoch durch Betätigen des gleichen Codesenders geöffnet werden, wenn dieser Codesender in der Nähe der Bedienstelle 4 betätigt wird. Dann werden sowohl die Türen des Kraftfahrzeugs 1 als auch ddie Kofferraumklappe 19 entriegelt.

Für den Fall, daß ein Mitfahrer die Kofferraumklappe 19 öffnen möchte, während der Fahrer an seinem Platz bleibt, ist am Anlaßschalter eine Bedienstelle 5 vorgesehen, bei deren Betätigung die Kofferraumklappe 19 entriegelt wird. Damit bei einer anschließenden Weiterfahrt die Kofferraumklappe 19 wieder verriegelt ist, kann entweder in an sich bekannter Weise vorgesehen sein, daß nach Öffnen und Wiederverschließen der Kofferraumklappe 19 die Verriegelung automatisch erfolgt
oder daß eine Verriegelung automatisch nach Ablauf einer vorgegebenen Zeit durchgeführt wird.

Die Fondtüren 8, 9 sowie eine Tankverschlußklappe 10 sind wie die Beifahrertür 6 und die
Beifahrertür 7 ebenfalls an die Zentralverriegelungsanlage angeschlossen, weisen jedoch nur eine
Verriegelungsvorrichtung aber keine Bedienstelle
auf.

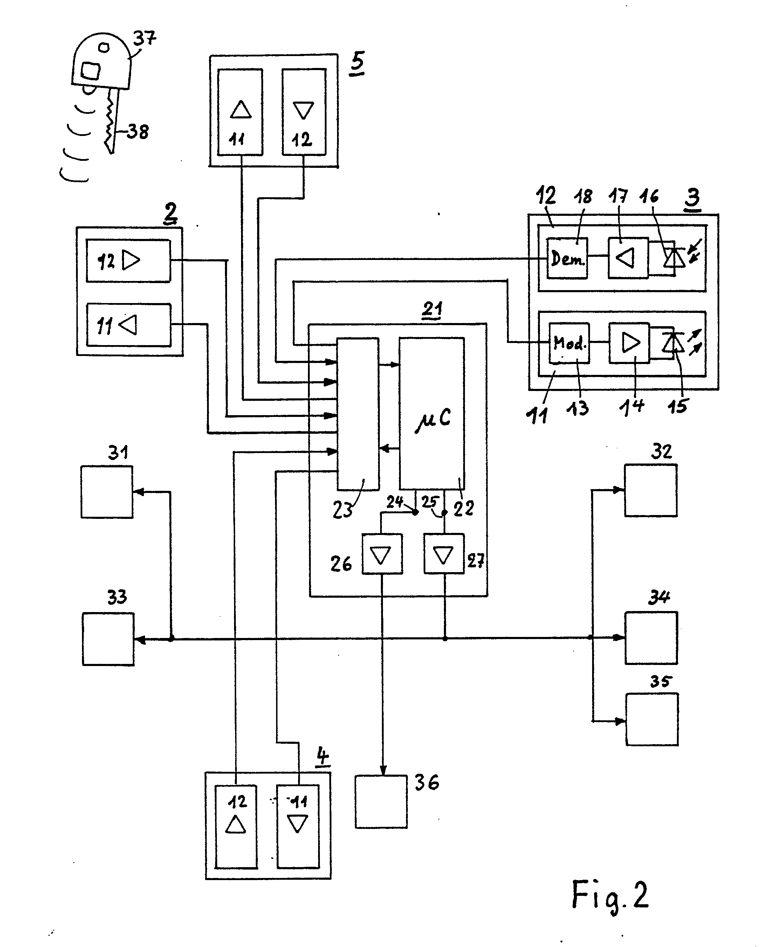

Bei den in den Figuren 2, 3 und 4 dargestellten
Ausführungsbeispielen sind die Bedienstellen als
solche grundsätzlich gleich. Der Einfachheit halber
wurde lediglich die Bedienstelle 3 in den Figuren 2
und 3 etwas detaillierter dargestellt und ist im folgenden etwas näher beschrieben. Jede der Bedienstellen besteht aus einer Sendeeinrichtung 11
und einer Empfangseinrichtung 12. Die Sendeeinrichtung 11 wiederum umfaßt einen Modulator 13,
einen Verstärker 14 und eine IR-Diode 15. Die
Empfangseinrichtung besteht aus einer Fotodiode
16, einem Verstärker 17 und einem Demodulator
18. Jede der Bedienstellen 2, 3, 4, 5 ist über
jeweils zwei Leitungen mit einem Steuergerät 21
verbunden, welches im wesentlichen aus einem
Mikrocomputer 22 und einer Schnittstellenschaltung 23 besteht.

Während die Bedienstellen 2, 3, 4, 5 über die
Schnittstellenschaltung 23 mit dem Mikrocomputer
22 verbunden sind, sind an zwei Ausgängen 24, 25
des Mikrocomputers 22 über je eine Leistungsstufe
26, 27 Verriegelungsvorrichtungen 31 bis 36 angeschlossen. Dabei wird über den Ausgang 24 des
Mikrocomputers 22 die Verriegelungsvorrichtung
36 gesteuert, welche für die Kofferraumklappe 19
(Fig. 1) vorgesehen ist, während über den Ausgang
25 die übrigen Verriegelungsvorrichtungen betätigt
werden. Dabei ist die Verriegelungsvorrichtung 31
der Fahrertür und die Verriegelungsvorrichtung 32
der Beifahrertür zugeordnet. Die Verriegelungsvorrichtung 33 und 34 befinden sich an den
Fondtüren. Die Verriegelungsvorrichtung 35 ver-
bzw. entriegelt den Tankverschluß.

Ein Codesender 37, der mit einem Schlüssel
38 kombiniert sein kann, dient zur Betätigung der
Zentralverriegelungsanlage. Treffen die vom Codesender 37 abgegebenen Infrarot-Signale auf eine
Empfangseinrichtung, so gibt diese über die
Schnittstellenschaltung 23 ein entsprechendes Signal an den Mikrocomputer 22. Diesem Signal setzt
die Schnittstellenschaltung 23 eine Information
darüber zu, welche Empfangseinrichtung die Signale empfangen hat. Mit Hilfe des im Mikrocomputer
22 gespeicherten Programms wird aus diesen Informationen abgeleitet, welche der Verriegelungsvorrichtungen 31 bis 36 betätigt werden. Beim
Empfang der Infrarot-Signale an den Bedienstellen
2 und 3 werden sämtliche Türen und der Tankdeckel entriegelt. Beim Empfang der IR-Signale an der
Bedienstelle 4 werden die Türen, der Tankdeckel
und die Kofferraumklappe entriegelt. Beim Empfang von Infrarot-Signalen an der Bedienstelle 5 in
der Nähe des Anlaßschalters wird lediglich die Kofferraumklappe entriegelt.

Bei der Zentralverriegelungsanlage gemäß Fig.
2 enthält jede Bedienstelle außer der Empfangseinrichtung eine Sendeeinrichtung. An sich kann die
Erfindung auch ohne Sendeeinrichtungen verwirklicht werden. Zum Schutz gegen ein unbefugtes
Öffnen und Benutzen eines Kraftfahrzeugs, nachdem der Code zum Entriegeln "abgehört" wurde,
sind jedoch Zentralverriegelungsanlagen mit
Infrarot-Fernbedienung bekannt geworden, bei
denen eine Rückmeldung vom Steuergerät an den
Codesender erfolgt, um den Code nach jedem
Öffnungsvorgang zu verändern. Um dieses in vorteilhafter Weise mit der vorliegenden Erfindung zu
kombinieren, sind den Empfangseinrichtungen der
Bedienstellen Sendeeinrichtungen zugeordnet.

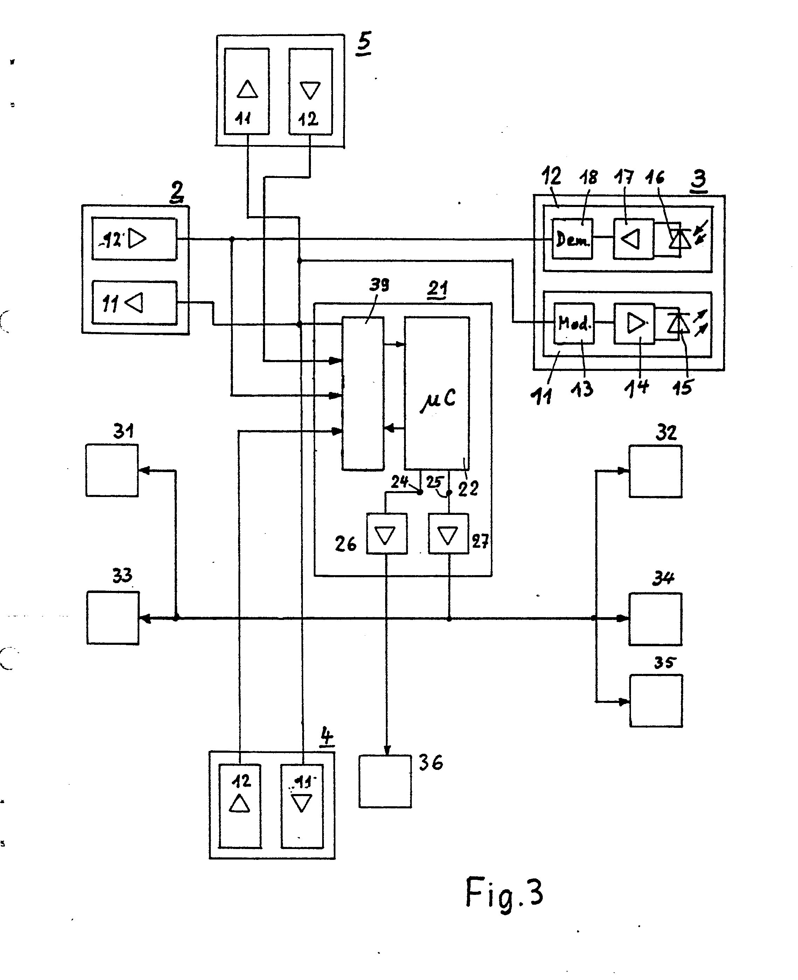

Bei der Zentralverriegelungsanlage nach Fig. 2
sind die Sendeeinrichtungen einzeln vom Steuergerät 21 ansteuerbar. Demgegenüber ist bei der
Zentralverriegelungsanlage nach Fig. 3 die
Schnittstellenschaltung 39 lediglich mit einem
gemeinsamen Ausgang für die Sendeeinrichtungen
11 versehen. Dadurch wird die Schnittstellenschaltung und die Verkabelung einfacher. Es werden jedoch von allen Infrarot-Dioden 15 (Fig. 2)
Rückmeldesignale ausgestrahlt, wenn an einer Bedienstelle IR-Signale empfangen werden.

Außerdem sind bei der Zentralverriegelungsanlage nach Fig. 3 die Empfangseinrichtungen 12 der
Bedienstellen 2 und 3 gemeinsam mit einem
Eingang der Schnittstellenschaltung 39 verbunden.
Dadurch wird eine weitere Vereinfachung der
Schnittstellenschaltung 39 möglich. Es wird allerdings dann nicht unter schieden, ob eine Entriegelung von der Fahrer-oder Beifahrertür aus gewünscht wird.

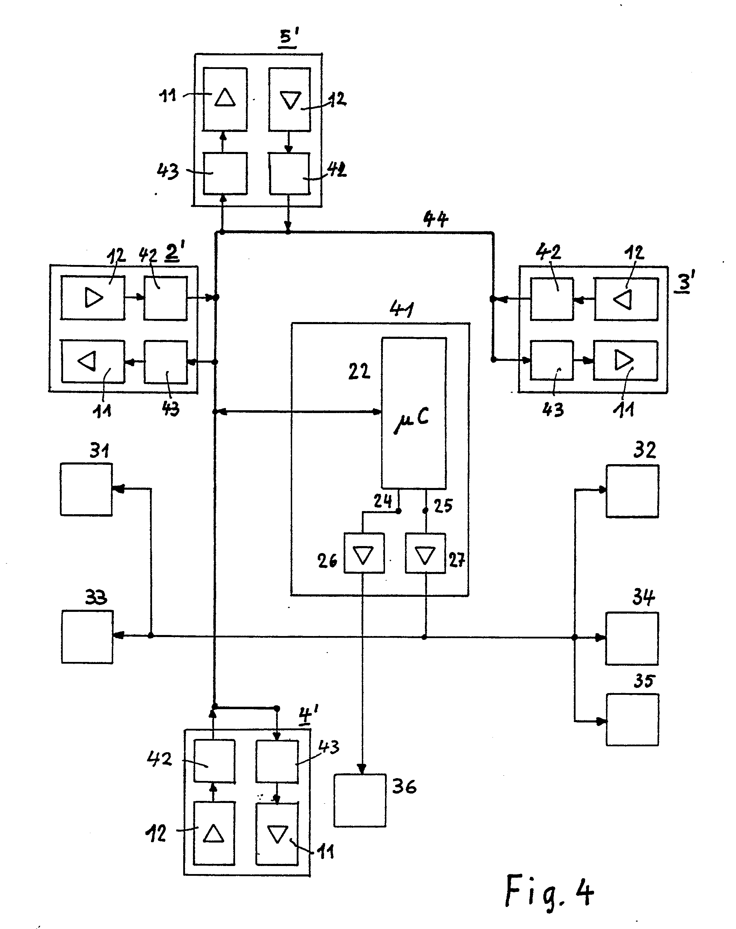

Die Zentralverriegelungsanlage nach Fig. 4
unterscheidet sich von denjenigen nach Fig. 2 und
Fig. 3 dadurch, daß im Steuergerät 41 keine
Schnittstellenschaltung angeordnet ist, sondern daß
die Sendeeinrichtungen 11 und die Empfangseinrichtungen 12 mit dem Mikrocomputer über ein
Bussystem verbunden sind, welches eine multiplexe Übertragung der Signale von den Empfangseinrichtungen 12 zum Computer und vom Computer zu den Sendeeinrichtungen 11 gestattet.
Dazu sind die Empfangseinrichtungen 12 mit je
einer Ausgangsschnittstelle 42 und die Sendeeinrichtungen mit je einer Eingangsschnittstelle 43
versehen. Zum Betrieb derartiger Bussysteme sind
verschiedene Verfahren bekannt. So können beispielsweise die Empfangseinrichtungen 12 nacheinander vom Mikrocomputer 22 abgefragt werden.

Dazu gibt der Mikrocomputer 22 Abfragesignale ab, die reihum Adressen der Empfangseinrichtungen 12 bzw. der Ausgangsschnittstellen 42 enthalten. Die jeweilige Ausgangsschnittstelle gibt nach Empfang der ihr zugeordneten Adresse die empfangenen und demodulierten Signale uber die Leitung 44 an den Mikrocomputer 22 ab.

Da jeweils zu einer Zeit nur eine der Empfangseinrichtungen Signale empfangen kann, ist es jedoch auch möglich, die Signale in den Ausgangsschnittstellen 42 mit einer der jeweiligen Bedienstelle 2' bis 5' zugeordneten Kennung zu versehen und in die Busleitung 44 einzuspeisen.

## Ansprüche

1. Zentralverriegelungsanlage für ein Kraftfahrzeug, wobei zur Steuerung mehrerer Verriegelungsvorrichtungen mehrere an verschiedenen Stellen des Kraftfahrzeugs angeordnete Bedienstellen vorgesehen sind, denen von einem Signalgeber Signale zum Ver-und/oder Entriegeln zuführbar sind, dadurch gekennzeichnet , daß in Abhängigkeit davon, welcher Bedienstelle (2, 3, 4, 5) Signale zugeführt werden, einzelne Verriegelungsvorrichtungen (36) von der Steuerung ausgenommen sind.

2. Zentralverriegelungsanlage nach Anspruch 1, dadurch gekennzeichnet, daß bei Zuführung von Signalen zu in Bereichen der Türen (Fahrertür, Beifahrertür) angeordneten Bedienstellen (2, 3) eine für die Kofferraumklappe (19) vorgesehene Verriegelungsvorrichtung (36) von der Steuerung ausgenommen ist.

3. Zentralverriegelungsanlage nach einem der Ansprüche 1 oder 2, dadurch gekennzeichnet, daß über eine Bedienstelle (4) im Bereich des Kofferraums Verriegelungsvorrichtungen (31 bis 36) an der Kofferraumklappe (19) und an den Türen betätigbar sind.

4. Zentralverriegelungsanlage nach einem der vorhergehenden Ansprüche, dadurch gekennzeichnet, daß im Fahrgastraum eine weitere Bedienstelle (5) angeordnet ist, mit welcher di Verriegelungsvorrichtung (36) fur die Kofferraumklappe bedienbar ist.

5. Zentralverriegelungsanlage nach Anspruch 4, dadurch gekennzeichnet, daß der Signalgeber (37) eine bauliche Einheit mit einem Schlüssel (38) bildet und daß die weitere Bedienstelle (5) im Bereich des Anlaßschalters angeordnet ist.

6. Zentralverriegelungsanlage nach einem der Ansprüche 4 oder 5, dadurch gekennzeichnet, daß eine Zeitsteuerung vorgesehen ist, die eine vorgegebene Zeit nach dem Entriegeln die Kofferraumklappe (19) verriegelt.

7. Zentralverriegelungsanlage nach einem der vorhergehenden Ansprüche, dadurch gekennzeichnet, daß die Bedienstellen (2, 3, 4, 5) und der Signalgeber (37) drahtlose Übertragungseinrichtungen bilden.

8. Zentralverriegelungsanlage nach Anspruch 7, dadurch gekennzeichnet, daß die drahtlosen Übertragungseinrichtungen Infrarot-Übertragungseinrichtungen sind.

9. Zentralverriegelungsanlage nach einem der vorhergehenden Ansprüche, dadurch gekennzeichnet, daß die Bedienstellen (2, 3, 4, 5) von Empfangseinrichtungen (12) gebildet sind, deren Ausgänge mit jeweils einem Eingang eines Steuergerätes (21) verbunden sind.

10. Zentralverriegelungsanlage nach Anspruch 9, dadurch gekennzeichnet , daß die Empfangseinrichtungen (12) je einen Strahlungsempfänger (16), einen Verstärker (17) und einen Demodulator (18) umfassen.

11. Zentralverriegelungsanlage nach einem der Ansprüche 9 oder 10, dadurch gekennzeichnet, daß die Bedienstellen (2, 3, 4, 5) ferner Sendeeinrichtungen (11) aufweisen, die mit jeweils einem Ausgang des Steuergerätes (21) verbunden sind.

12. Zentralverriegelungsanlage nach Anspruch 11, dadurch gekennzeichnet, daß die Sendeeinrichtungen (11) jeweils einen Modulator (13, einen Verstärker (14) und einen Strahlungssender (15) umfassen.

13. Zentralverriegelungsanlage nach einem der Ansprüche 1 bis 8, dadurch gekennzeichnet, daß die Bedienstellen (2, 3, 4, 5) Empfangseinrichtungen (12) umfassen, deren Ausgänge über ein Bussystem (42, 43, 44) mit einem Steuergerät (41) verbunden sind.

14. Zentralverriegelungsanlage nach Anspruch 13, dadurch gekennzeichnet , daß die Empfangseinrichtungen (12) je einen Strahlungsempfänger, einen Verstärker (17), einen Demodulator (18) und eine Ausgabeeinheit (42) umfassen, welche den empfangenen Signalen Kennsignale hinzufügt, welche die jeweilige Bedienstelle (2, 3, 4, 5) kennzeichnen.

15. Zentralverriegelungsanlage nach Anspruch 13, dadurch gekennzeichnet , daß die Empfangseinrichtungen (12) je einen Strahlungsempfänger (16), einen Verstärker (17), einen Demodulator (18) und eine adressierbare Ausgangsschnittstelle (42) umfassen, welche nach einem Abfragesignal der Steuereinheit (41) die empfangenen und demodulierten Signale an die Steuereinheit (41) ausgibt.

16. Zentralverriegelungsanlage nach einem der Ansprüche 13 bis 15, dadurch gekennzeichnet, daß die Bedienstellen (2, 3, 4, 5) ferner Sendeeinrichtungen (11) aufweisen, die mit dem Bussystem (42, 43, 44) verbunden sind.

17. Zentralverriegelungsanlage nach Anspruch 16, dadurch gekennzeichnet , daß die Sendeeinrichtungen (11) jeweils eine adressierbare Eingangsschnittstelle (43), einen Modulator (13), einen Verstärker (14) und einen Strahlungssender (15) umfassen.

Fig.1

Fig.2

Fig.3

Fig. 4